# EUROPEAN PATENT APPLICATION

(11) **EP 1 009 104 A2**
(43) Date of publication of application: **14.06.2000**
(21) Application number: 99403113.6
(22) Date of filing: 10.12.1999
(51) Int. Cl.: H04B 1/38, H04M 1/02

(54) **Wireless telephone capable of automatically opening a flip**

(30) Priority: 11.12.1998 KR 9854288
(71) Applicant: Ace Technology, Puchun-shi, Kyounggi-do (KR)
(72) Inventor: Paek, Rack-June, Woomyun-Dong, Seocho-Ku, Seoul (KR); Hwang, In-Soo, Anyang-shi, Kyounggi-do (KR)
(74) Representative: Doireau, Marc

(57) **Abstract**

The present invention is a wireless telephone capable of automatically opening a flip. For automatically opening the flip, the wireless telephone of the present invention comprises a main-body (10) having a liquid crystal display and a plurality of key pads; an antenna (20) radiating electromagnetic wave while being busy, and being disposed on an end portion of said main-body (10); a flip (30) for covering a side of said main-body (10), and being rotatably disposed on a side of said main-body; a joining device (32) for joining said flip (30) to said main-body (10) and providing a rotation force to said flip (30); and an opening device (40) for opening said flip (30), and being movably disposed on a side of said main-body (10).

## Description

### BACKGROUND OF THE INVENTION

### 1. Field of the Invention

The present invention relates to a wireless telephone having a flip such as cellular phones and so on. More particularly, it relates to a wireless telephone capable of automatically opening the flip, minimizing that electromagnetic wave radiated from an antenna is absorbed in the user's body and increasing a radiant efficiency of the antenna.

### 2. Description of Related Art

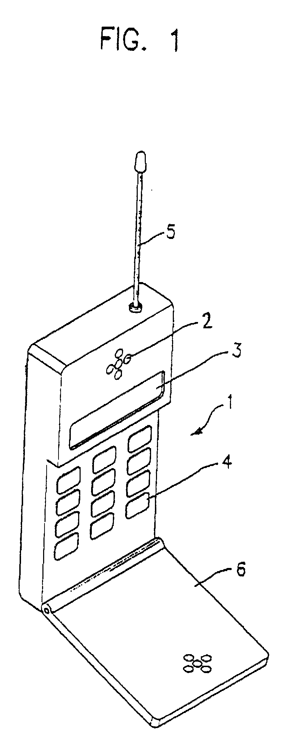

Hereinafter, a wireless telephone having a flip of a prior art will be schematically described, referring to Fig. 1.

As shown in Fig. 1, the conventional wireless telephone comprises a main-body 1 having an earpiece 2, a liquid crystal display 3 and a plurality of key pads 4 on front surface thereof, an antenna 5 disposed on the upper end of the main-body 1 and a flip 6 rotatably disposed on the main-body 1.

When the telephone is busy, a user holds the main-body 1 with one hand and the flip 6 with the other hand and then rotates the held flip 6 with the other hand. Thereafter, the user closes his ear and mouth to the earpiece 2 and a mouthpiece 7 respectively in order to communicate with a partner. Then, the antenna 5 radiates electromagnetic wave (i.e., radio frequency) and a part of the radiated electromagnetic wave is absorbed in the user's head.

As described above, the prior wireless telephone is inconvenient because the user should use both hands to open the flip. Further, there are problems that the electromagnetic wave absorbed in the user's head may influence the user for harmful, quality of communication is deteriorated due to a screen effect by the user's head and a sufficient high-level power is required to compensate strength of radiation signal weakened by quantity of electromagnetic wave absorbed in the user's head.

### SUMMARY OF THE INVENTION

It is, therefore, an object of the present invention to provide a wireless telephone capable of automatically opening a flip at once.

Further, the other object of the present invention is to minimize electromagnetic wave which is absorbed in a user's head by absorbing the electromagnetic radiated from an antenna, and maximize a radiant efficiency of the antenna by reflecting the electromagnetic wave.

In order to accomplish the above object, the wireless telephone capable of automatically opening a flip according to the present invention comprises : a main-body having a liquid crystal display and a plurality of key pads; an antenna radiating electromagnetic wave while being busy, and being disposed on an end portion of said main-body; a flip for covering a side of said main-body, and being rotatably disposed on a side of said main-body; a joining device for joining said flip to said main-body and providing a rotation force to said flip; and an opening device for opening said flip, and being movably disposed on a side of said main-body.

### BRIEF DESCRIPTION OF THE ATTACHED DRAWINGS

Other features in structure, operation and advantages of the present invention will become more apparent to those skilled in the art from the following descriptions when read in conjunction with the accompanying drawings, in which :
Fig. 1 depicts a perspective view of a wireless telephone having a flip of a prior art;
Fig. 2 represents a perspective view of a wireless telephone capable of automatically opening a flip according to a present invention;
Fig. 3 illustrates an inside structure of main-body for movably disposing the opening button according to the present invention;
Fig. 4 shows a state disposing the opening button in the main-body according to the present invention; and
Fig. 5 is a partial perspective view showing rear portion of Fig. 2.

### DETAILED DESCRIPTIONS OF PREFERRED EMBODIMENT

Hereinafter, an embodiment according to the present invention will be described in detail, referring to the drawings.

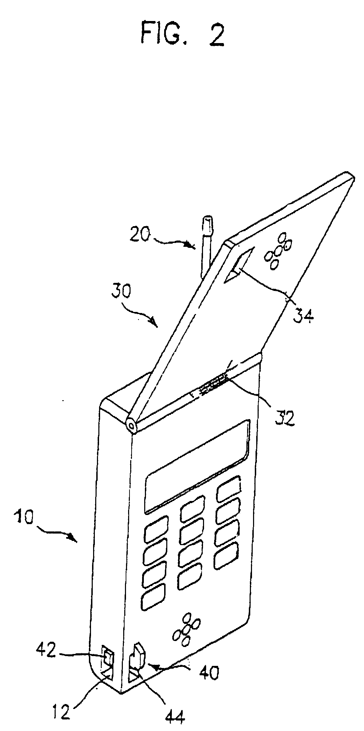

Fig. 2 shows a perspective view of a wireless telephone according to the present invention.

As shown in Fig. 2, the wireless telephone of the present invention comprises a main-body 10 having a liquid crystal display and a plurality of key pads, an antenna 20 disposed on upper end portion of the main-body 10, a flip 30 rotatably disposed on an upper portion of the main-body 10 and an opening button 40 disposed on a side of the main-body 10 in order to automatically open the flip 30.

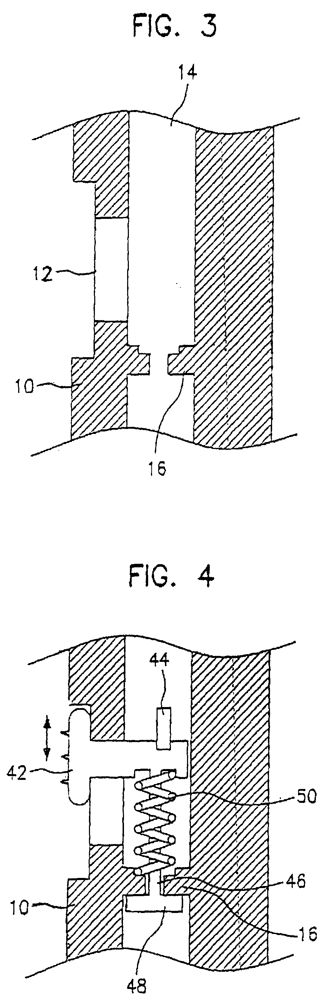

The main-body 10 includes a predetermined length guide portion 12 formed on the side thereof in order to guide movement of the opening button 40. Further, inside of the main-body 10, a space portion 14 is formed in order to be connected to the guide portion 12 and a pair of stoppers 16 are formed on lower portion of the space portion 14 in order to limit the movement of the opening button 40. The stoppers 16 are spaced out a predetermined distance from each other so that a path is formed between them (see Fig. 3).

The flip 30 is elastically rotated by a torsional spring 32 disposed on an upper end portion of the main-body 10. Further, inside of the flip 30, a locking groove 34 is formed so that a part of the opening button 40 is engaged. Therefore, the flip 30 covers a portion of the main-body 10 when the locking groove 34 of the flip 30 is engaged with the opening button 40, but the flip 30 is opened by an elastic force (i.e., rotation force) of the torsional spring 32 when the opening button 40 is released from the locking groove 34.

In this case, as can be shown in Fig. 4, the opening button 40 includes a substantially T-shaped shaft 42 having an upper portion to be movably positioned on the guide portion 12 and a lower portion to be inserted into the space portion 14. The portion positioned on the guide portion 12 of the shaft 42 has a plurality of unevennesses to prevent a user's finger from sliding. Further, a hook 44 is integrally formed on the portion of the shaft 42 inserted into the space portion 14. The hook 44 is protruded from front surface of the main-body 10 and is engaged with the locking groove 34 of the flip 30. Furthermore, on end portion of the shaft 42, a predetermined length bar 46 is extended from a portion of the shaft 42 to lower side of stoppers 16 through the path between the stoppers 16. Also, a stopping projection 48 is integrally formed on lower end portion of the bar 46. When the shaft 42 is moved upward, the stopping projection 48 is suspended lower surface of the stoppers 16 and limits the upward movement of the shaft 42. In this case, a spring 50 is positioned, on a peripheral portion of the bar 46, between the shaft 42 and an upper surface of the stoppers 16. The spring 50 provides an elastic force (i.e., restoring force) for lifting the shaft 42 moved downward.

When a user would like to communicate by the telephone of the present invention, the user holds the telephone with one hand and downwardly moves the shaft 42 positioned on the guide portion 12 with one finger of the hand. In this case, the hook 44 of the opening button 40 is released from the locking groove 34 and the flip 30 is automatically opened by the elastic force of the torsional spring 32. Thereafter, the shaft 42 is upward moved by the restoring force of the spring 50.

The opening button 40 may be applied to a wireless telephone having a flip which is opened in the downward.

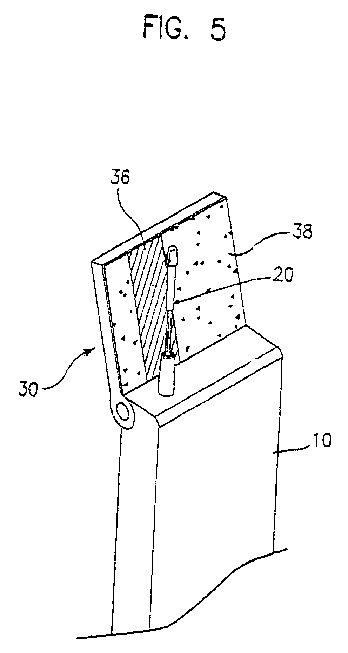

Furthermore, as can be shown in Fig. 5, when the flip 30 is opened, the flip 30 gets near to the antenna 20 radiating electromagnetic wave harmful to the user's health. Therefore, outer surface of the flip 30 is covered with reflection member 36 and absorption member 38, so that the electromagnetic wave radiated from the antenna 20 prevents the user from being influenced for harmful effect. That is, the reflection member 36 is covered on the center portion of the flip 30 closest to the antenna 20 in order to reflect the electromagnetic wave radiated from the antenna 20 and increase a radiant efficiency of the telephone. Additionally, the absorption member 38 is covered on both sides of the reflection member 36 in order to minimize the electromagnetic wave radiated from the antenna 20 and absorbed in the user's head.

The wireless telephone according to the present invention can easily open the flip by simple operation moving the opening button with one finger of hand holding the telephone.

Further, the present invention can protect the user's health from the electromagnetic wave radiated from the antenna and maximize a radiant efficiency of the antenna by reflecting and absorbing the electromagnetic wave radiated from the antenna.

It should be understood that the present invention is not limited to the particular embodiments disclosed herein as the best mode contemplated for carrying out the present invention and is not limited to the specific embodiments described in this specification except as defined in the appended claims.

## Claims

1. A wireless telephone capable of automatically opening a flip, characterised in that it comprises;
a main-body (10) having a liquid crystal display and a plurality of key pads;
an antenna (20) radiating electromagnetic wave while being busy, and being disposed on an end portion of said main-body;
a flip (30) for covering a side of said main-body (10), and being rotatably disposed on a side of said main-body;
a joining device (32) for joining said flip (30) to said main-body (10) and providing a rotation force to said flip; and
an opening device (40) for opening said flip (30), and being movably disposed on a side of said main-body (10).

2. The wireless telephone as recited in claim 1, wherein said joining device (32) is a spring.

3. The wireless telephone as recited in claim 1, wherein said flip (30) has a locking groove (34) capable of releasing or suspending a portion of said opening device (40).

4. The wireless telephone as recited in claim 3, wherein said main-body (10) has a guide portion (12) formed on a side thereof for guiding movement of said opening device (40), a space portion (14) formed inside said main-body (10) and connected to said guide portion (12) and a pair of stoppers (16) formed on lower portion of said space portion (14), said stoppers (16) are apart from each other so that a path is formed between them.

5. The wireless telephone as recited in claim 4, wherein said opening device (40) includes a shaft (42) movably disposed on said guide portion (12), a hook (44) capable of being engaged with said locking groove (34) of said flip (30) or being released from said locking groove (34) by movement of said shaft (42) and a restoring means (50) providing a force for restoring said shaft (42) moved downwardly to its original position.

6. The wireless telephone as recited in claim 5, wherein said opening device (40) includes a predetermined length member (46) extended from said shaft (42) to lower side of said stoppers (16) through the path between said stoppers, a stopping projection (18) formed on lower end portion of said member (46) in order to be suspended by said stoppers (16) and a elastic member (50) positioned between said shaft and said stoppers to provide the restoring force to said shaft.

7. The wireless telephone as recited in claim 5, wherein said shaft (42) has a plurality of unevennesses on a side surface thereof.

8. The wireless telephone as recited in claim 7, wherein said flip (30) is disposed on upper portion of said main-body (10) adjacent to said antenna (20).

9. The wireless telephone as recited in claim 8, wherein a portion of outer surface of said flip (30) is covered with reflection member (38) to reflect the electromagnetic wave radiated from said antenna.

10. The wireless telephone as recited in claim 9, wherein the other portion of the outer surface of said flip is covered with absorption member to absorb the electromagnetic wave.

11. The wireless telephone as recited in claim 7, wherein said flip (30) is disposed on lower portion of said main-body (10).
